# EUROPÄISCHE PATENTSCHRIFT

(11) **EP 1 387 967 B1**
(45) Veröffentlichungstag und Bekanntmachung des Hinweises auf die Patenterteilung: **02.11.2005**
(21) Anmeldenummer: 02769481.9
(22) Anmeldetag: 13.05.2002
(51) Int. Cl.: F16H 57/02

(54) **GETRIEBEBAUKASTEN**
TRANSMISSION MODULE
SYSTEME MODULAIRE D'ENGRENAGE

(30) Priorität: 12.05.2001 DE 10123194
(43) Veröffentlichungstag der Anmeldung: 11.02.2004
(73) Patentinhaber: Voith Turbo GmbH & Co. KG, 89522 Heidenheim (DE)
(72) Erfinder: KÖRNER, Tillmann, 89551 Zang (DE); KNOBLAUCH, Iris, 89558 Böhmenkirch (DE); TONEATTO, Marco, 89518 Heidenheim (DE); EUBLER, Hans-Peter, 89522 Heidenheim (DE); NEUWIRTH, Heiko, 89555 Steinheim (DE); KÖRNER, Alexander, 89555 Steinheim (DE); HELLMICH, Joachim, 85356 Freising (DE)
(74) Vertreter: Dr. Weitzel & Partner
(86) Internationale Anmeldenummer: PCT/EP2002/005223
(87) Internationale Veröffentlichungsnummer: WO 2002/093041

(56) Entgegenhaltungen:
- EP-A- 1 054 192
- DE-A- 19 809 472
- US-A- 4 041 807
- US-A- 4 308 763
- US-A- 5 404 772
- US-A- 5 662 007
- JÜRGEN PICKARD: "Planetengetriebe in automatischen Fahrzeuggetrieben" AUTOMONIEL-INDUSTRIE, Nr. 4, 1979, Seiten 41-48, XP008008196 in der Anmeldung erwähnt
- DE VOS G W ET AL: "MIGRATION OF POWERTRAIN ELECTRONICS TO ON-ENGINE AND ON-TRANSMISSION. THE GENERAL TREND FOR THE MOUNTING LOCATION OF POWERTRAIN ELECTRONICS REFLECTS A MIGRATION FROM PASSENGER AND ENGINE COMPARTMENTS TO ON-ENGINE AND ON-TRANSMISSION. WHILE OFFERING POTENTIAL SYSTEM-LEVEL BENEFITS, THERE ARE CHALLENG" AUTOMOTIVE ENGINEERING INTERNATIONAL, SAE INTERNATIONAL, US, Bd. 107, Nr. 9, September 1999 (1999-09), Seiten 25-29, XP000860906 ISSN: 0098-2571
- ROESCH R ET AL: "ELEKTROHYDRAULISCHE STEUERUNG UND AEUSSERE SCHALTUNG DES AUTOMATISCEN GETRIEBES W5A 330/580 VON MERCEDES-BENZ" ATZ AUTOMOBILTECHNISCHE ZEITSCHRIFT, FRANCKH'SCHE VERLAGSHANDLUNG. STUTTGART, DE, Bd. 97, Nr. 10, 1. Oktober 1995 (1995-10-01), Seiten 698-700,702,70, XP000535669 ISSN: 0001-2785

## Beschreibung

Die Erfindung betrifft ein Getriebebaukastensystem, im einzelnen mit den Merkmalen aus dem Oberbegriff des Anspruchs 1.

Getriebebaueinheiten sind in einer Vielzahl von Ausführungen für unterschiedliche Einsatzzwecke bekannt. Stellvertretend wird auf
Jürgen Pickard: "Planetengetriebe in automatischen Fahrzeuggetrieben", Automobilindustrie 4/79, Seiten 41 bis 48
verwiesen. Um einem breiten Spektrum an Einsatzgebieten gerecht zu werden, werden zunehmend Getriebebaukästen bzw. Baukastensysteme entwickelt. Ein derartiger Getriebebaukasten ist aus dem zitierten Stand der Technik, Seite 47 bekannt. Dieser Getriebebaukasten erlaubt das Zusammenstellen von Mehrgang-Getrieben. Der Getriebebaukasten umfasst dabei die Einzelbaugruppen hydrodynamischer Getriebeelemente in Form eines hydrodynamischen Drehzahl/Drehmomentenwandlers, einen hydrodynamischen Retarder, einen Vorschaltsatz, einen Grundgetriebebaustein in Form eines Hauptgetriebes zur Realisierung von drei Gängen und ein hinteres Getriebegehäuse. Zur Realisierung eines 3-Gang-Getriebes werden dabei lediglich der hydrodynamische Drehzahl-/Drehmomentenwandler sowie das Hauptgetriebe für drei Gänge und die Getriebesteuerung und das hintere Getriebegehäuse verwendet. Bei zusätzlichem Vorsehen eines Retarders wird dieser zwischen dem hydrodynamischen Drehzahl-/Drehmomentenwandler und dem Grundgetriebebaustein angeordnet. Für das 4-Gang- und das 6-Gang-Getriebe wird jeweils noch ein Vorschaltsatz vorgeschalten. Bei allen ist die Getriebesteuerung an dem Getriebegehäuse des 3-Gang-Hauptgetriebes angeordnet.

Diese Lösung erlaubt zwar bereits das Zusammenstellen unterschiedlicher Schaltgetriebekonzepte für unterschiedliche Einsatzzwecke, jedoch sind zur Umsetzung vertikal getrennte Baueinheiten, z. B. Planetenradebenen und die Retarderebene erforderlich. Des weiteren sind zur Realisierung der erforderlichen elektrischen Verbindungen, beispielsweise der elektrischen Verbindung zwischen Sensoren und der ECU sowie der ECU und den Aktoren eine Vielzahl von Steckverbindungen und Leitungsdurchführungen in den oben genannten Baueinheiten vorzusehen. Eine separate Prüfbarkeit des Grundgetriebebausteines für sich allein und der Sensorik für sich allein ist nicht gegeben. Es ist jeweils immer ein Getriebedeckel erforderlich, da in diesem auch ein Teil der Sensoren oder anderer Funktionselemente enthalten sind. Des weiteren ist auch eine einfache Austauschbarkeit der Sensorik im Gesamtgetriebe, d. h. 3-Gang-, 4-Gang- oder 6-Gang-Getriebe für die hydraulische Steuereinrichtungen sowie der Sensorik nicht ohne weiteres möglich, ohne den Getriebebaukasten auseinanderzunehmen.

Der Erfindung liegt daher die Aufgabe zugrunde, ein Getriebebaukastensystem, umfassend eine Mehrzahl von Getriebebaueinheiten, insbesondere Verbundgetriebe-Baueinheit derart zu schaffen, dass unter Verwendung gleicher Bausteine mit geringem Aufwand und unter Beibehaltung eines hohen Standardisierungsgrades Getriebebaueinheiten für eine Vielzahl unterschiedliche Einsatzzwecke erstellt werden können. Die einzelne Getriebebaueinheit des Baukastens sollte dabei selbst durch einfache Art und Weise für andere Anwendungszwecke mechanisch umrüstbar sein ohne Sensoren, Aktuatoren, ECU, Verkabelungen anpassen zu müssen. Die Vorfabrikation, d. h. die Anzahl der Fertigungsstufen bis zur Endprüfung und die Durchführung von Wartungsstufen unter Nutzung einfachen Personals sollten verringert werden.

Die erfindungsgemäße Lösung ist durch die Merkmale des Anspruchs 1 charakterisiert. Vorteilhafte Ausgestaltungen sind jeweils in den Unteransprüchen wiedergegeben.

Beim erfindungsgemäßen Getriebebaukastensystem zur Erstellung einer Mehrzahl für unterschiedliche Einsatzzwecke modifizierte Getriebebaueinheiten mit jeweils einem Getriebeeingang und mindestens einem Getriebeausgang ist allen Getriebebaueinheiten ein Grundgetriebebaustein gemeinsam, welcher für alle Getriebebaueinheiten identisch ist und einen Eingang und einen Ausgang umfasst. Der Grundgetriebebaustein ist mit weiteren Zusatz- oder Hilfsbausteinen zur jeweiligen Getriebebaueinheit zusammenfassbar.

Der Grundgetriebebaustein umfasst einen mechanischer Getriebeteil, welcher die leistungsübertragenden Bauelemente, bspw. Planetenradsätze etc. beinhaltet und der von einem Getriebegehäuseteil umschlossen wird. Der mechanische Getriebeteil mit dem Gehäuseteil bilden Grundgetriebebaustein, welcher durch eine Abschlusseinheit, umfassend mindestens ein weiteres Gehäuseteilelement, verschließbar ist. Der Grundgetriebebaustein umfasst neben den leistungsübertragenden Bauelementen des weiteren mindestens eine Logikeinheit, eine Versorgungseinheit und/oder weitere Funktionseinheiten, die bei Zusammenfassung als Steuerungs- und Versorgungsmodul angesprochen werden können. Die Logik- und Steuereinheit ist erfindungsgemäß im Gehäuse der Grundgetriebebausteins integriert und unterhalb der leistungsübertragenden Bauelemente angeordnet, d. h. in einem bestimmten Mindestabstand zum Außenumfang der leistungsübertragenden Elemente oder aber am Gehäuseteil des Grundgetriebebausteins angeflanscht. Die Versorgungseinheit ist erfindungsgemäß jeweils ebenfalls dem Grundgetriebebaustein zugeordnet. Diese umfasst Bestandteile eines Betriebs- und/oder Schmier- und/oder Steuermittelversorgungssystems, ferner auch diesbezüglich erforderliche Zusatzeinheiten wie Wärmetauscher, Kühleinrichtung, Pumpen, Ventile etc. Die Versorgungseinheit ist ebenfalls im Gehäuseteil des Grundgetriebebausteines unterhalb der leistungsübertragenden Elemente integriert.

Unter Logikeinheit wird dabei die Gesamtheit aus elektronischer Steuervorrichtung, insbesondere ECU, Erfassungseinrichtungen, das heißt Sensoren und Stelleinrichtungen sowie die Kopplung mit diesen verstanden. Unter Steuer- und Versorgungseinheit werden die hydraulische Steuerung sowie Bestandteile des Betriebsmittel- und/oder Steuermittel- und/oder Schmiermittelsystems verstanden.

Die hydraulische Versorgungskette, das heißt die Olansaugung, Zahnradpumpe, Filter, Schmierung, Ölfüllmechanismen für den Wandler und Retarder, Wärmetauscher, Steuerblöcke etc. und geschlossene Kreisläufe können damit im Steuer-und Versorgungsmodul getrennt von den leistungsübertragenden Elementen im Grundgetriebebaustein gebildet werden. Durch die erfindungsgemäße Lösung erfolgt eine räumliche Zusammenfassung einzelner Bauelemente nach ihrer Grundfunktion, zum einen der Logik- und Steuer- und Versorgungseinheiten und zum anderen der leistungsführenden Elemente bei gleichzeitiger Bildung einer horizontalen Grenzlinie zwischen diesen Elementen. Durch die Anordnung werden mehrere Aufgaben gelöst. Somit können bei gleichbleibender Ausführung des Grundgetriebebausteines diesem unterschiedliche Logik- und Steuer- und Versorgungseinheiten zugeordnet werden. Ferner kann der Grundgetriebebaustein durch Zusammenfassung mit Zusatzbausteinen in Form von sogenannten Anpassungs- und Hilfsbausteinen zu einer Vielzahl von Getriebeeinheiten variiert werden. Bei Zusammenfassung der Logikeinheit und der Steuer- und Versorgungseinheit in jeweils einem Modul können diese auf einfache Art und Weise beliebig miteinander kombiniert werden. Dies ermöglicht auf einfache Art und Weise die Schaffung einer Baureihe, wobei der Grundgetriebebaustein für sich und das Steuer- und Versorgungsmodul sowie das Logikmodul auf Halde gebaut werden können und die Getriebebaueinheit, insbesondere ein Verbundgetriebe, zu einem möglichen späteren Zeitpunkt gemäß dem Einsatzbedarf mit den Anpassungs- und Hilfsbausteinen ergänzbar ist. Der Grundgetriebebaustein mit Logik- und Steuer- und Versorgungseinheit ist des weiteren für sich alleine prüfbar, so dass die aufwendige Zusammenstellung der gesamten Getriebebaueinheit zu Prüfzwecken nicht mehr erforderlich ist. Diese alleinige Prüfbarkeit wird durch die Separation der leistungsführenden Funktionen und nicht leistungsführenden Funktionen in horizontal getrennten Einheiten im Grundgetriebebaustein ermöglicht. Es ist dann nur noch eine Endprüfung auf Dichtheit vorzunehmen, wenn das gesamte Verbundgetriebe nach Kundenwunsch zusammengestellt wird.

Unter einem Grundgetriebebaustein wird dabei ein Grundgetriebe verstanden, welches in Kombination mit unterschiedlichen Anfahreinheiten und Abtrieben für eine Vielzahl von unterschiedlich ausgelegten Getriebebaueinheiten für verschiedene Einsatzzwecke genutzt werden kann, wobei die Modifikationen lediglich im Abschlussteil und der Anfahreinheit, insbesondere der Wahl der Anfahrelemente, besteht.

Der Grundgetriebebaustein beinhaltet die leistungsübertragenden Elemente des mechanischen Getriebeteils und das Gehäuse. Dieser kann mit den entsprechenden Steuerungs- und Versorgungsmodulen kombiniert werden.
Unter leistungsführenden Elementen werden dabei alle leistungsübertragenden Elemente, einschließlich der die Drehzahl-/Drehmomente wandelnden Elemente verstanden. Zu diesen gehören beispielsweise bei Getriebeausführungen mit Ravigneaux-Satz die Planetenradsätze und die zur Realisierung unterschiedlicher Gangstufen erforderlichen Schaltelemente. Das Logikmodul wird von einer Logikeinheit, einem Steuerblock (Steuer-Schiebergehäuse, Magnetventile) gebildet, das Steuer- und Versorgungsmodul von der hydraulischen Steuerung und Versorgungseinheiten, Zahnradpumpen und Filter. Die Logikeinheit beziehungsweise - einheiten umfassen in der Regel eine elektronische Steuervorrichtung. Die Steuer-und Versorgungseinheit umfasst eine hydraulische oder pneumatische Steuervorrichtung. Die elektronische Steuervorrichtung umfasst des weiteren mindestens eine elektronische Steuereinrichtung, wobei darunter das Steuergerät bzw. eine Einheit aus elektrischen und elektronischen Bauelementen verstanden wird, welcher die zur Ansteuerung der Getriebebaueinheit erforderlichen Größen zugeführt und in dieser verarbeitet werden, und die aus den Eingangsgrößen entsprechend des gewünschten Ansteuervorganges gebildete Stellgrößen ausgibt. Die Steuereinrichtung umfasst in der Regel eine Mehrzahl elektrischer und elektronischer Bauelemente, welche entsprechend der vorzunehmenden Verarbeitung der Eingangsgrößen einander zugeordnet und miteinander gekoppelt sind. Vorzugsweise sind eine Mehrzahl der elektronischen und/oder elektrischen Bauelemente auf wenigstens einer Trägerplatte gemeinsam angeordnet und werden von einem Steuereinrichtungsgehäuse umschlossen. Die elektronische Steuervorrichtung umfasst neben der Steuereinrichtung Einrichtungen zur Erfassung der Eingangsgrößen und Mittel zur Kopplung der Einrichtungen mit der Steuereinrichtung, des weiteren Mittel zur Kopplung mit den entsprechenden Stellelementen zur Betätigung der Stelleinrichtungen, die den einzelnen Getriebeelementen der Getriebebaueinheit zur Änderung der Funktions- oder Betriebsweise zugeordnet sind. Da die Stelleinrichtungen in Form von Aktoren auch Bestandteil hydraulischer Steuervorrichtungen sein können, können diese Mittel zur Kopplung dann sowohl der elektronischen als auch der hydraulischen Steuervorrichtung zugeordnet werden. Unter hydraulischer Steuervorrichtung werden dabei die hydraulischen Verbindungen zwischen den Erfassungsmitteln der Eingangsgrößen und/oder der elektronischen Steuervorrichtung und den Stelleinrichtungen, welche in der Regel hydraulisch durch einen Druck beaufschlagt werden und die als Aktoren fungierenden Elemente und deren Kopplungen mit den Stellelementen verstanden. Einbezogen werden dabei im wesentlichen alle, zur Betätigung bzw. Einstellung der einzelnen Gangstufen erforderlichen zu betätigenden Elemente.

Unter Versorgungseinheit werden dabei Einrichtungen verstanden, die im Versorgungssystem der Getriebebaueinheit mit Betriebsmittel für den hydrodynamischen Getriebeteil, Schmiermittel für den mechanischen Getriebeteil und die Lager, Steuermittel zur Ansteuerung der Stelleinrichtungen bereitstellen. Dazu gehören beispielsweise Pumpeinrichtungen und im Versorgungssystem integrierte Filtereinrichtungen. Unter Funktionseinheiten werden dabei Einrichtungen verstanden, die den anderen beiden Einheiten - Logikeinheit oder Versorgungseinheit zugeordnet sind, jedoch nicht primär Funktionen nur in diesen Einheiten übernehmen, zum Beispiel Kühleinrichtungen etc..

Unter einem weiteren Aspekt der Erfindung umfasst der mechanische leistungsübertragende Getriebeteil, welcher den Grundgetriebebaustein bildet, wenigstens Leistungsübertragungselemente, mit denen zumindest drei Gangstufen realisiert werden können. Zur Anpassung an unterschiedliche Anforderungen sind in der Anschlusseinheit Nachschaltstufen und/oder Mitten- und Winkelabtriebe integrierbar. Zur Realisierung eines Verbundgetriebes mit mindestens vier Gängen wird in vorteilhafter Weise dem Verbundgetriebe in der Abschlusseinheit eine Nachschaltstufe in Form eines Gruppenschaltsatzes nachgeschaltet. Dieser Gruppenschaltsatz ermöglicht dabei entsprechend der Ansteuerung der einzelnen Getriebeelemente die Betriebsweise der so erstellten Getriebekonfiguration als 3-, 4-, 5- und 6-Gang-Getriebe. Ohne zusätzliche Mittel zur Realisierung eines Mittenabtriebes oder eines Winkeltriebes erfolgt der Abtrieb koaxial oder parallel zur Getriebeeingangswelle.

In einer besonders vorteilhaften Ausgestaltung des Grundgetriebebausteines und damit des mechanischen Getriebeteiles umfasst dieser zur Realisierung von drei Gangstufen zwei Planetenradebenen, wobei beide miteinander gekoppelt sind und ein gemeinsames Element, vorzugsweise in Form des Steges nutzen, wobei dieser gleichzeitig den Ausgang des Grundgetriebebausteines bildet. Bei Ausbildung der Abschlusseinheit als einfaches Deckelelement ohne Integrationsmöglichkeit weiterer leistungsübertragender Elemente wird das Verbundgetriebe als 3-Gang-Getriebe konzipiert. Die Integration der Nachschaltstufe in die Abschlusseinheit ermöglicht in Kombination mit den zwei Planetenradebenen des Grundgetriebebausteines eine sehr kompakte Gesamtgetriebebaueinheit für Anwendungsbeispiele, bei denen der Betriebsbereich über mindestens vier bis sechs Gänge abdeckbar sein soll.

Die Mittel zur Realisierung eines Mittenabtriebes oder eines Winkelabtriebes sind entweder bei der 3-Gang-Version allein in der Abschlusseinheit oder bei Vorsehen einer Nachschaltstufe dieser nachgeordnet in der Abschlusseinheit integriert, wobei der Abtrieb des Winkeltriebes den Abtrieb der Getriebebaueinheit und damit den Getriebeausgang bildet.

Für die räumliche Anordnung der einzelnen Elemente im Logik- und dem Steuer-und Versorgungsmodul bestehen eine Vielzahl von-Möglichkeiten. Insbesondere die räumliche Anordnung der elektronischen Steuervorrichtung und der hydraulischen Steuervorrichtung kann entsprechend einer der nachfolgend genannten Ausführungen erfolgen:
a) Anordnung von hydraulischer Steuervorrichtung und elektronischer Steuereinrichtung oder elektronischer Steuervorrichtung in horizontaler Richtung nebeneinander und in vertikaler Richtung betrachtet in einer Ebene, d. h. ohne Vorsatz;
b) Anordnung der hydraulischen Steuervorrichtung und der elektronischen Steuereinrichtung oder Steuervorrichtung in horizontaler Richtung nebeneinander und in vertikaler Richtung versetzt zueinander;
c) Anordnung übereinander.

Vorzugsweise ist dabei jeder der Steuervor- bzw. -einrichtungen ein eigenes entsprechendes Trägerelement zugeordnet, welche miteinander zu einer Trageinrichtung verbindbar sind, so dass eine Baueinheit, umfassend wenigstens die elektronische Steuereinrichtung und die hydraulische Steuervorrichtung, bilden. Diese kann dann auf einfache Art und Weise in ihrer Gesamtheit aus dem Steuer- und Versorgungsmodul abgenommen werden. Eine weitere Möglichkeit besteht darin beide - die elektronische-Steuereinrichtung der elektronischen Steuervorrichtung und hydraulische Steuervorrichtung - auf einem gemeinsamen zentralen Trägerelement anzuordnen und ebenfalls eine Baueinheit zu bilden. In beiden Fällen wird dabei die gesamte Baueinheit als Trägerelement bzw. Trägerelementen, hydraulischer Steuervorrichtung und elektronischer Steuereinrichtung als Steuerungsplattform bezeichnet, die als handelbare Baueinheit anbietbar ist.

Unter einem weiteren Aspekt der Erfindung erfolgt die Anordnung von Logikeinheiten, Steuer- und Versorgungseinheiten und Funktionseinheiten in Einbaulage betrachtet in einer Höhe, welche im Bereich der Höhe des Betriebsmittel-, Schmiermittel- oder Steuermittelsumpfes im Getriebe liegt. Unter einem weiteren Aspekt der Erfindung ist dabei der elektronischen Steuervorrichtung ein Gehäuse zugeordnet, welches vorzugsweise gegen Hydraulikflüssigkeit, beispielsweise Öl und/oder eine andere Flüssigkeit dicht ausgeführt ist. Die Steuereinrichtung kann dann direkt im Betriebsmittel-, Steuermittel- und/oder Schmiermittelsumpf der Getriebebaueinheit angeordnet werden. Dadurch besteht zusätzlich die Möglichkeit, die elektrischen und elektronischen Bauelemente der Steuereinrichtung einer wenigstens indirekten Kühlung durch das im Betriebsmittel-, Steuermittel- und/oder Schmiermittelsumpf der Getriebebaueinheit befindliche Betriebsmittel oder der dort angeordneten Kühleinrichtungen, Wärmetauscher etc. auszusetzen. Die öldichte Ausführung des Gehäuses bedingt jedoch zur Realisierung der elektrischen Bindung zwischen der Steuereinrichtung und den zur Erfassung der, den aktuellen Fahrzustand wenigstens mittelbar charakterisierenden Größen und/oder des Fahrerwunsches und/oder weiterer Randbedingungen erforderlichen Sensoren der Steuervorrichtung und den mittels der Steuervorrichtung anzusteuernden Aktoren zur Betätigung der einzelnen Elemente der Getriebebaueinheit, beispielsweise zur Realisierung des Gangwechsels der Schaltelemente bzw. der Stelleinrichtungen der Schaltelemente und/oder zur Vorgabe von Eingangsgrößen durch eine übergeordnete Steuer- bzw. Regelvorrichtung, eine entsprechend gestaltete Durchführung oder vorzugsweise nur Andockung, an beispielsweise einer Getriebesteckdose an der Ölwanne.

Die Anordnung der Steuereinrichtung in Einbaulage im unteren Bereich der Getriebebaueinheit und das Vorsehen eines entsprechenden Gehäuses ermöglicht es, die Sensoren zur Erfassung der einzelnen, die Betriebsweise der einzelnen Elemente der Getriebebaueinheit zu einem bestimmten Zeitpunkt wenigstens mittelbar beschreibenden Größen ebenfalls im Bereich unterhalb der Getriebemittellinie, welche der Rotationsachse entspricht, anzuordnen und somit die gesamte Steuervorrichtung inclusive Sensorik und Aktorik relativ kompakt auszuführen. Die Anordnung im Betriebsmittel-, Steuermittel- und/oder Schmiermittelsumpf, welche in der Regel in einer sogenannten Ölwanne angesammelt wird, die vom Unterteil des Getriebegehäuses gebildet wird, im vorliegenden Fall vom Gehäuseelement des Rumpfgetriebes, erlaubt es des weiteren, die Steuervorrichtung komplett mit der dazugehörigen Steuerhydraulik, der Aktorik zur Betätigung der einzelnen Schaltelemente und den Sensoren sowie den Versorgungseinrichtungen, Förderelementen, Filtern etc., welche in der Regel am Gehäuse der Ölwanne angeordnet sind, auf einfache Art und Weise zu demontieren und separat als Gesamtheit der Funktionstüchtigkeit, eventuell zusätzlich unter bestimmten vordefinierbaren Bedingungen zu prüfen.

Die Schaffung des Getriebebaukastens erfolgt unter Ausnutzung des Grundgetriebebausteines durch Kombination mit unterschiedlichen Anfahreinheiten beispielsweise in Form eines hydrodynamischen Getriebeteils und der Moglichkeit der unterschiedlichen Ausgestaltung der Abschlusseinheiten. Die einzelnen so bestellten Getriebebaueinheiten unterscheiden sich dabei bei gleichbleibendem mechanischem Getriebeteil lediglich durch die Ausgestaltung der Anfahreinheiten und der Abschlusseinheiten, wobei diese wesentlich für den Anwendungsfall und die an den Anwendungsfall geknüpften Anforderungen ist sowie eventuell der Logik- und Steuer- und Versorgungseinheiten.

Der leistungsübertragende und den Grundgetriebebaustein bildende Getriebeteil sowie der dazu kombinierbare Steuerungs- und Versorgungsmodul bilden dabei für einen Getriebebaukasten ein Grundgetriebe, wobei die einzelnen Einheiten - Grundgetriebebaustein und Logik- sowie Steuer- und Versorgungsmodul - separat hergestellt werden können und lediglich als Module miteinander kombiniert werden müssen. Insbesondere die durch die horizontale Trennung zwischen den leistungsführenden Teilen im Grundgetriebe und den Steuerungs- und Versorgungseinheiten mögliche leichte Austauschbarkeit ist dabei von Vorteil. Als kleinste gemeinsame Einheit können dabei für den Getriebebaukasten beispielsweise bereits die einzelnen Bausteine Grundgetriebebaustein und Logik- sowie Steuerungs- und Versorgungseinheiten gewählt werden. Ausgehend vom Grundgetriebebaustein können für unterschiedliche Anwendungszwecke unterschiedliche Anfahreinheiten vorgesehen werden und des weiteren auch unterschiedliche Abtriebe, beispielsweise Mittenabtriebe oder Winkeltriebe. Dies wird über die Kombination mit den weiteren Anpassungs- und Hilfsbausteinen Anfahreinheit und Abschlusselement realisiert. Dabei bilden die Gehäuse von Anfahreinheit und Abschlusselement zusammen mit dem Gehäuseteilelement des Grundgetriebebausteines das Gesamtgetriebegehäuse. Unter einem weiteren Aspekt der Erfindung ist es auch möglich, ausgehend von einem Grundgetriebebaustein aus Grundgetriebebaustein bereits die Anfahreinheit im Grundgetriebebaustein mit zu integrieren, das heißt insbesondere für die Fälle, bei denen das gleiche Anfahrelement beziehungsweise die gleiche Konfiguration der Anfahreinheit verwendet werden kann. In diesem Fall erfolgt die Anpassung an die unterschiedlichsten Abtriebsgegebenheiten über die entsprechende Ausgestaltung des Abschlusselementes, insbesondere als Nachschaltgruppe mit oder in Form eines Mittenabtriebes oder Winkeitriebes.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung das Grundprinzip der Ausnutzung eines erfindungsgemäßen gestalteten Grundgetriebebausteines in einer Verbundgetriebeeinheit mit einer Anfahreinheit in Form eines Wandlers, dem Grundgetriebebaustein und einem Logik- Steuer- und Versorgungsmodul in Kompaktbauweise;
- Figur 2: verdeutlicht eine vorteilhafte Ausgestaltung eines Grundgetriebebausteines mit Logik- Steuerungs- und Versorgungsmodul zur Nutzung in einem erfindungsgemäßen Plattformkonzept;
- Figuren 3a bis 3e: verdeutlichen einzelne Getriebeausführungen mit hinsichtlich Anfahreinheit und Grundgetriebebaustein identischem Aufbau und unterschiedlichen Abschlusseinheiten;
- Figuren 4a bis 4d: zeigen in schematisch vereinfachter Darstellung Anwendungsbeispiele für Getriebebaueinheiten gemäß Figur 3a;
- Figuren 5a bis 5c: zeigen in schematisch vereinfachter Darstellung Anwendungsbeispiele-für eine Getriebebaueinheit gemäß Figur 3b;
- Figuren 6a bis 6c: zeigen in schematisch vereinfachter Darstellung Ausführungen von Antriebssystemen mit Getriebebaueinheiten gemäß der Figuren 3c und 3d;
- Figur 7: verdeutlicht in schematisch vereinfachter Darstellung ein Anwendungsbeispiel einer Getriebebaueinheit gemäß Figur 3e.

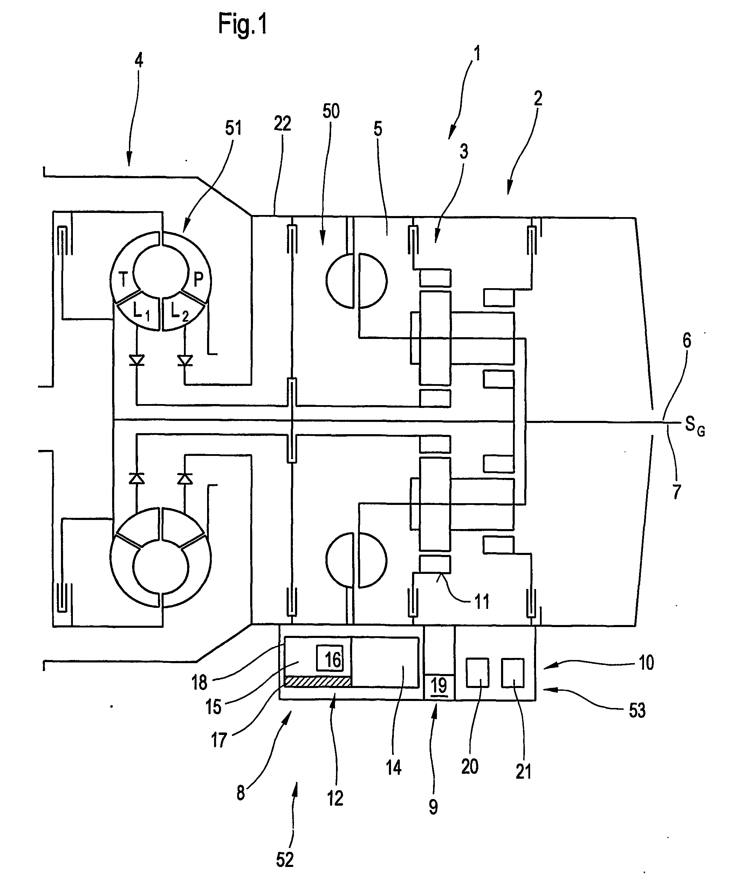

Die Figur 1 verdeutlicht in schematisch vereinfachter Darstellung das Grundprinzip des erfindungsgemäßen Getriebebaukastensystem in Form eines Grundgetriebebausteins 5 in kompakter Weise in einer Gesamtgetriebebaueinheit 1. Bei den Getriebebaueinheiten handelt es sich vorzugsweise um Verbundgetriebe 2, welche wenigstens einen mechanischen Getriebeteil 3 umfassen, der mit einer Anfahreinheit 51 in Form eines hydrodynamischen Getriebeteiles oder eines hydrostatischen Getriebeteiles 4 gekoppelt ist. Die Grundversion der Kombination 50 aus Grundgetriebebaustein 5 und Anfahreinheit 51 in Form eines hydrodynamischem Getriebeteiles 4 stellt dabei eine Version zur Realisierung von wenigstens drei Gangstufen dar. Die dazugehörigen mechanischen Getriebeteile 3 und der hydrodynamische Getriebeteil 4 oder der hydrostatische Getriebeteil sind zu einer baulichen Einheit aus einem Grundgetriebebaustein 5 und Anfahreinheit 51 zusammengefasst. Der Grundgetriebebaustein 5 weist einen Ausgang 6 auf, welcher mit den leistungsübertragenden Elementen koppelbar ist, die mit dem Grundgetriebebaustein 5 zur Gewährleistung weiterer zusätzlicher Funktionen zusammenfassbar sind. Erfindungsgemäß sind alle Logikeinheiten und Steuer- und Versorgungseinheiten 9 sowie die zugehörigen Funktionseinheiten 10 beispielsweise in Form eines Logik- und Steuerungs- beziehungsweise Versorgungsmodules 53 im Grundgetriebebaustein 5 integriert. Diese bilden zusammen mit dem Grundgetriebebaustein 5 ein Plattformgetriebe 50. Die Anordnung der Logikeinheiten 8, der Steuer- und Versorgungseinheiten 9 sowie der diesen zugeordneten Funktionseinheiten 10 erfolgt dabei unterhalb der leistungsübertragenden Elemente des mechanischen Getriebeteils 3, d. h. im wesentlichen unterhalb der Verlängerung einer theoretischen Verbindungsachse durch den Eingang und Ausgang 6 des Grundgetriebebausteins und in einem Abstand zum Außenumfang der leistungsübertragenden Elemente, welcher hier mit 11 bezeichnet ist. Das Mindestmaß für den einzuhaltenden Abstand ist dabei derart zu wählen, dass die Funktionsweise der leistungsübertragenden Elemente des Grundgetriebebausteines 5 nicht beeinträchtigt werden. Die Logikeinheiten 8 umfassen dabei Funktionselemente für Steuer- und Regelaufgaben. Zu den Logik- beziehungsweise Steuereinheiten 8 gehören dabei beispielsweise eine der Getriebebaueinheit 1 bzw. dem Verbundgetriebe 2 zugeordnete Steuervorrichtung 12, umfassend mindestens eine Steuereinrichtung 13, wobei unter dem Begriff Steuereinrichtung 13 im wesentlichen ein Steuergerät, bspw. ECU zu verstehen ist, während der Begriff Steuervorrichtung 12 auch die Ein- und Ausgänge der Steuereinrichtung 13 sowie deren Kopplungsmöglichkeiten mit Sensoren und Aktoren sowie die Verbindungsleitungen berücksichtigt. Die Steuervorrichtung 12 umfasst mindestens eine elektronische Steuervorrichtung 15. Die hydraulische Steuervorrichtung 14 ist Bestandteil der Steuer- und Versorgungseinheit 9. Die elektronische Steuervorrichtung 15 umfasst dabei eine elektronische Steuereinrichtung 16, unter welcher eine Einheit aus elektrischen und elektronischen Bauelementen verstanden wird, welche die zur Ansteuerung der Getriebebaueinheit 1, insbesondere des Verbundgetriebes 2 erforderlichen Größen zugeführt und in dieser verarbeitet werden, und die aus den Eingangsgrößen entsprechend des gewünschten Ansteuervorganges gebildete Stellgrößen ausgibt. Die elektronische Steuereinrichtung 16 umfasst in der Regel eine Mehrzahl elektrischer und elektronischer Bauelemente, welche entsprechend der vorzunehmenden Verarbeitung der Eingangsgrößen einander zugeordnet und miteinander gekoppelt sind. Vorzugsweise sind eine Mehrzahl der elektrischen und/oder elektronischen Bauelemente auf wenigstens einer Trägerplatte 17 gemeinsam angeordnet und werden vorzugsweise von einem Steuereinrichtungsgehäuse 18 umschlossen. Dabei besteht die Möglichkeit, dass die Trägerplatte 17 vollständig vollständig im Steuereinrichtungsgehäuse 18 integriert ist oder aber wenigstens einen Teilwandbereich des Steuereinrichtungsgehäuses 18 bildet. Die elektronische Steuervorrichtung 15 umfasst neben der Steuereinrichtung 16 Einrichtungen zur Erfassung der Eingangsgrößen und Mittel zur Kopplung der Einrichtungen mit der Steuereinrichtung 16, des weiteren Mittel zur Kopplung mit den entsprechenden Stellelementen zur Betätigung der Stelleinrichtungen, die einzelnen Getriebeelementen der Getriebebaueinheit, insbesondere des mechanischen Getriebeteils 3 und des hydrodynamischen Getriebeteils 4 zur Änderung der Funktions- und/oder Betriebsweise zugeordnet sind. Da die Stelleinrichtungen in Form von Aktoren auch Bestandteile der hydraulischen Steuervorrichtung 14 sein können, können die Mittel zur Kopplung dann sowohl der elektronischen als auch der hydraulischen Steuervorrichtung 14 zugeordnet werden. Unter der hydraulischer Steuervorrichtung 14 werden dabei die hydraulischen Verbindungen zwischen den Erfassungsmitteln einer Eingangsgröße und/oder der elektronischen Steuervorrichtung 15 und den Stelleinrichtungen, welche in der Regel hydraulisch durch einen Druck beaufschlagt werden und die als Aktoren fungierenden Elemente und deren Kopplung mit den Stelleinrichtungen, verstanden. Einbezogen werden dabei im wesentlichen alle, zur Betätigung bzw. Einstellung der einzelnen Gangstufen an der Getriebebaueinheit 1 bzw. dem Verbundgetriebe 2 erforderlichen zu betätigenden Elemente.

Die Steuer- und Versorgungseinheit 9 umfasst ferner die Elemente, welche beispielsweise zur Bereitstellung und Zuführung von Druckmittel zu den Stelleinrichtungen der Getriebeelemente dienen. Zu diesen gehören beispielsweise Pumpeinrichtungen 19 sowie Verbindungsleitungen zur Führung des Druckmittels. Unter Funktionseinheiten 10 werden dabei Elemente subsummiert, welche den einzelnen Einheiten Logikeinheit 8 oder Versorgungseinheit 9 zugeordnet sind und eine zusätzliche, nicht primär nur diesen Einheiten zugrundeliegende Funktion erfüllen bzw. eine eigenständige Aufgabe haben. Zu diesen gehören beispielsweise Filtereinrichtungen 20, Wärmetauscher 21.

Erfindungsgemäß erfolgt die Anordnung der Elemente der Logikeinheit 8, der Steuer- und Versorgungseinheit 9 sowie der Funktionseinheiten 10 getrennt von den leistungsübertragenden Elementen der Getriebebaueinheit, d. h. dem mechanischen und hydraulischen Getriebeteil, wobei die Anordnung vorzugsweise unterhalb der Symmetrieachse S_{G} der leistungsübertragenden Elemente erfolgt bzw. immer in einem bestimmten Abstand a zum Außenumfang 11 der leistungsübertragenden Elemente.

Der derartig gebildete Grundgetriebebaustein 5, welcher zur Realisierung wenigstens dreier Gangstufen konzipiert ist, bildet dabei eine eigenständige Grundgetriebebaueinheit, welche als eigenständige Baueinheit separat prüfbar ist, wobei der Gehäuseteil 23 nicht notwendiger Weise dicht abgeschlossen werden muss. Das Grundprinzip der erfindungsgemäßen Lösung liegt dabei in der räumlichen Zusammenfassung der einzelnen Baugruppen nach ihrer Grundfunktion, insbesondere die Zusammenfassung der leistungsführenden Elemente sowie der Logik- und Versorgungseinheiten bei gleichzeitiger Bildung einer horizontalen Grenzlinie zwischen diesen. Vorzugsweise erfolgt die Anordnung der Logikeinheit 8, der Steuer- und Versorgungseinheit 9 und der Funktionseinheit 10 in Einbaulage in Höhe bzw. unterhalb des Ölvolumenspiegels. Diese Lösung bietet neben dem Vorteil einer erhöhten Zuverlässigkeit, da die Anzahl und Länge der zur elektrischen Kopplung erforderlichen Leitungsverbindungen durch Integration der elektronischen Steuervorrichtung 15 im Gehäuse 22 der Getriebebaueinheit gegenüber den konventionellen Lösungen erheblich geringer ist, die Möglichkeit der individuellen Abstimmung der Steuervorrichtung auf die jeweilige Getriebebaueinheit, ohne dass bei einem Austausch von wesentlichen leistungsübertragenden Elementen der Gesamtgetriebebaueinheit 1 und damit einer Änderung der Konfiguration der Getriebebaueinheit eine Umprogrammierung der Steuereinrichtung vorgenommen werden muss. Die eindeutige Zuordnung von Getriebebaueinheit und elektronischer Steuervorrichtung ermöglicht eine Vereinfachung der Fertigungslogistik. Die bauliche Integration der elektronischen Steuervorrichtung 15 und der hydraulischen Steuervorrichtung 14 ermöglicht die Schaffung einer prüfbaren Einheit von Steuervorrichtung, Steuerhydraulik, Aktuatorik und Sensorik der Getriebebaueinheit 1, wobei die Steuervorrichtung 15 bereits an die getriebespezifischen Toleranzen während des Prüfvorgangs anpassbar ist. Die Anordnung unterhalb der Getriebesymmetrieachse bzw. unterhalb oder neben dem Außenumfang der leistungsübertragenden Elemente bietet den Vorteil, dass die elektronische und hydraulische Steuervorrichtung leicht zugänglich und austauschbar sind.

Bezüglich der räumlichen Anordnung von hydraulischer Steuervorrichtung 14 und elektronischer Steuervorrichtung 15 bestehen eine Vielzahl von hier im einzelnen nicht dargestellten Möglichkeiten. Denkbar sind dabei
a) eine Anordnung von hydraulischer Steuervorrichtung 14 und elektronischer Steuervorrichtung 15 oder zumindest elektronischer Steuereinrichtung 16 in horizontaler Richtung nebeneinander und in vertikaler Richtung betrachtet in einer Ebene, d. h. ohne Versatz;
b) Anordnung der hydraulischen Steuervorrichtung 14 und elektronischer Steuereinrichtung 16 oder der elektronischen Steuervorrichtung 15 in horizontaler Richtung nebeneinander und in vertikaler Richtung versetzt zueinander;
c) Anordnung in horizontaler Richtung betrachtet übereinander.

Vorzugsweise ist dabei jeder der Steuervor- bzw. -einrichtungen - elektronischer Steuereinrichtung 16 bzw. elektronischer Steuervorrichtung 15 und hydraulischer Steuervorrichtung 14 -, hier jedoch nicht dargestellt, ein entsprechendes Trägerelement zugeordnet, welche miteinander zu einer Trageinrichtung verbindbar sind, so dass eine Baueinheit, umfassend wenigstens die elektronische Steuereinrichtung 16 und die hydraulische Steuervorrichtung 14, bildbar ist. Diese kann dann auf einfache Art und Weise in ihrer Gesamtheit aus der Getriebebaueinheit herausgenommen werden.

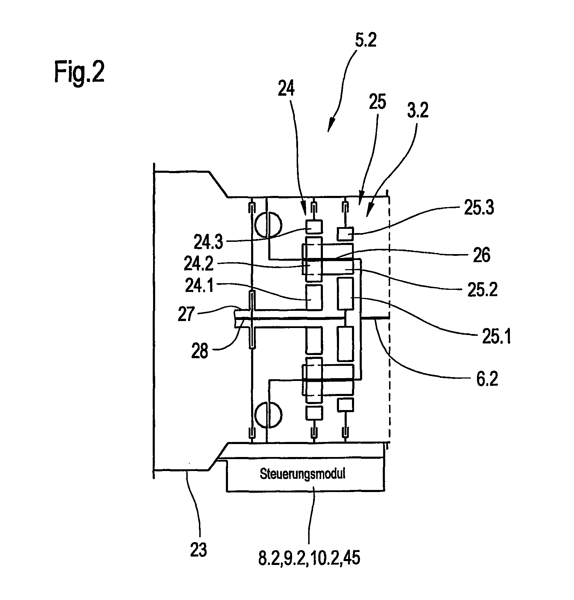

Figur 2 verdeutlicht in schematisch vereinfachter Darstellung eine mögliche Ausführung eines Grundgetriebebausteines 5.2. Dieser umfasst einen mechanischen Getriebeteil 3.2, welcher von einem Gehäuse 23 umschlossen ist. Das Gehäuse 23 ist dabei derart konzipiert, dass dieses zumindest den mechanischen Getriebeteil 3.2 aufnimmt, vorzugsweise jedoch zusätzlich auch den hier nicht dargestellten Zusatzbausteinen 55 in Form eines hydraulischen bzw. hydrodynamischen Getriebeteiles 4. Der mechanische Getriebeteil 3.2 umfasst im dargestellten Fall zwei Planetenradsätze, einen ersten Planetenradsatz 24 und einen zweiten Planetenradsatz 25. Jeder Planetenradsatz umfasst ein Sonnenrad, der Planetenradsatz 24 ein Sonnenrad 24.1, der Planetenradsatz 25 das Sonnenrad 25.1, Planetenräder und ein Hohlrad. Für den Planetenradsatz 24 sind die Planetenräder mit 24.2 und das Hohlrad mit 24.3 bezeichnet. In Analogie wurde diese Bezeichnung auch für die Planetenräder 25.2 und das Hohlrad 25.3 des Planetenradsatzes 25 vorgenommen. Die Planetenräder 24.2 und 25.2 der einzelnen Planetenradsätze 24 und 25 sind miteinander mechanisch gekoppelt, hier über einen gemeinsamen Steg 26. Der Steg 26 bildet dabei den Ausgang 6.2 des Grundgetriebebausteines 5.2 und gleichzeitig des so entstehenden Plattformgetriebes 50.2. Beide Sonnenräder sind jeweils über eine Welle mit dem hier nicht dargestellten Getriebeeingang der Getriebebaueinheit 1 verbunden. Die Wellen sind hier jeweils mit 27 und 28 bezeichnet. Die Wellen 27 und 28 bilden dabei die Eingänge des Grundgetriebebausteines 5.2. Diese sind wenigstens mittelbar mit dem Getriebeeingang der Gesamtgetriebebaueinheit gekoppelt oder stützen sich in entsprechender Weise an einem Element der Gesamtgetriebebaueinheit ab. Des weiteren im Grundgetriebebaustein 5.2 integriert sind unterhalb der leistungsübertragenden Elemente, insbesondere der Planetenradsätze 24 und 25, die Logikeinheit 8.2, die Steuer-und Versorgungseinheit 9.2 und die Funktionseinheiten 10.2, hier alle zusammengefasst zu einem sogenannten Steuer- und Versorgungsmodul 45, welcher lösbar mit dem Gehäuse des Grundgetriebebausteines 5.2 verbunden sein kann.

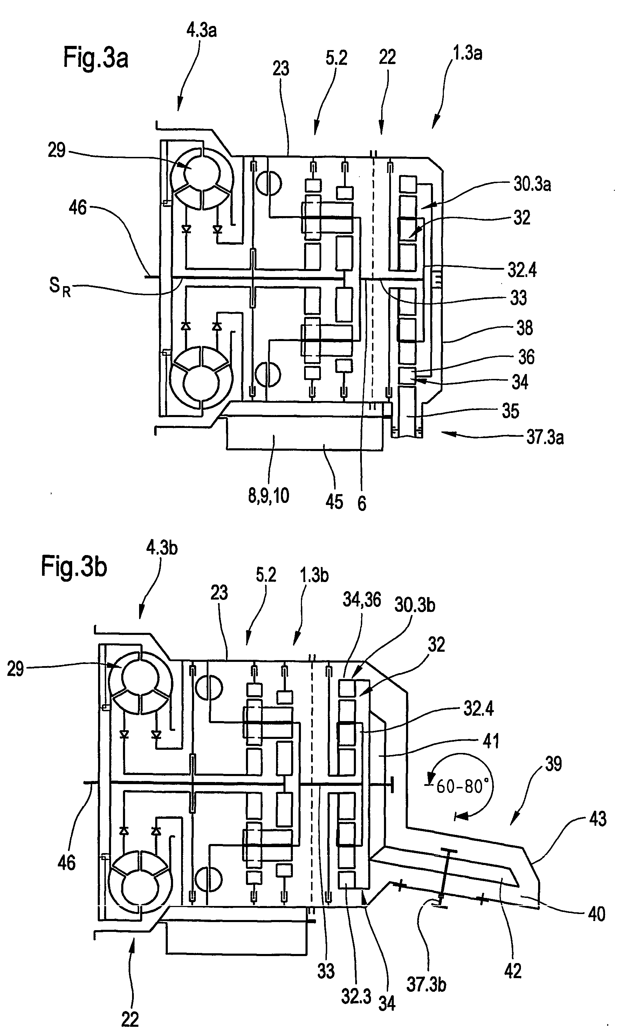

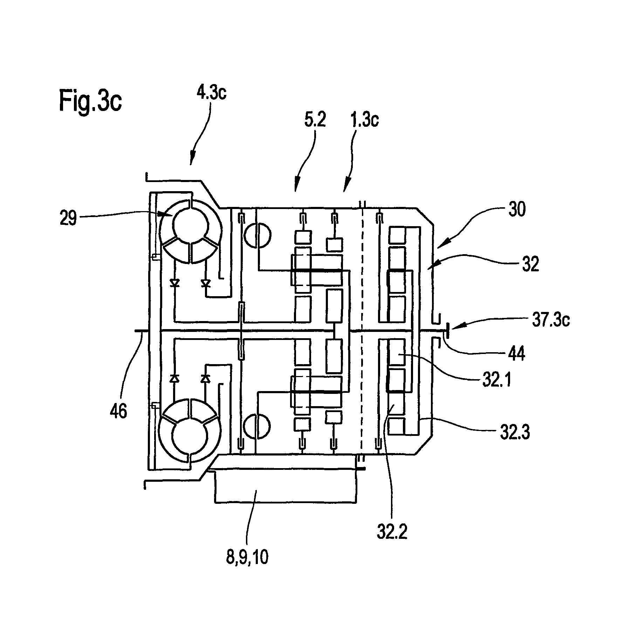

Die Figuren 3a bis 3e verdeutlichen die Realisierung verschiedener Gesamtgetriebebaueinheiten 1.3a bis 1.3e aus einem Grundgetriebebaustein gemäß Figur 2 und Logikeinheiten 8 und Steuer- und Versorgungseinheiten 9, vorzugsweise zusammengefasst zum Steuer- und Versorgungsmodul 53. Jede der Getriebebaueinheiten 1.3a bis 1.3e umfasst dabei einen Grundgetriebebaustein 5.2, welcher vorzugsweise für alle unterschiedlichen Getriebebaueinheiten 1.3a bis 1.3e gleich aufgebaut und dimensioniert ist, beispielsweise wie in Figur 2 dargestellt. Des weiteren weist die Getriebebaueinheit 1.3a bis 1.3e einen Zusatzbaustein in Form einer Anfahreinheit 52.3 in Form eines hydrodynamischen Getriebeteiles 4.3a bis 4.3e auf, welcher einen hydrodynamischen Drehzahl-/Drehmomentwandler 29 umfasst, wobei der hydrodynamische Drehzahl-/Drehmomentwandler vorzugsweise für alle unterschiedlichen Getriebebaueinheiten 1.3a bis 1.3e ebenfalls hinsichtlich des Aufbaus und der Dimensionierung gleich ausgeführt ist. Zur Anpassung an unterschiedliche Anforderungen besteht jedoch auch die Möglichkeit, dem Grundgetriebebaustein 5.3 unterschiedliche Zusatzbausteine in Form von Drehzahl-/Drehmomentwandler 29 zuzuordnen. Zur Gewährleistung der Anpassung der Getriebebaueinheiten 1.3a bis 1.3e an unterschiedliche Randbedingungen sind je nach Erfordernis ein weiterer Zusatzbaustein 56, umfassend Nachschaltstufen 30.3a bis 30.3e und/oder Abtriebseinheiten 31 zugeordnet.

Unter einem weiteren Aspekt der Erfindung kann gemäß den Ausführungen in den Figuren 3a bis 3e auch das aus den Steuer- und Versorgungseinheiten 9 und Logikeinheiten 8 gebildete Steuer- und Versorgungsmodul 53 für die Getriebebausteine 5 unterschiedlicher Getriebeeinheiten 1 identisch ausgeführt sein und eine Anpassung an unterschiedliche Einsatzerfordernisse lediglich über den Austausch der Zusatzbausteine 55 in Form der Anfahreinheiten 52 und/oder der Zusatzbausteine in Form der Abschlusselemente erfolgen. In diesem Fall bildet das Plattformgetriebe 50 aus der Kombination Grundgetriebebaustein 5 und Steuer- und Versorgungsmodul 53 die Grundlage für den Aufbau eines Getriebebaukastens.

Unter einem weiteren Aspekt der Erfindung kann das Plattformgetriebe 50 auch derart ausgestaltet sein, dass dieses den Grundgetriebebaustein 5.2 umfasst, sowie einen Steuer- und Versorgungsmodul 53, wobei dieser Modul nicht zwangsläufig als modulare Einheit zu verstehen ist, sondern aus einer Vielzahl von einzelnen Elementen, die mehr oder weniger miteinander verbunden sind. Zum sogenannten Grundgetriebebaustein gehört dann auch ein Gehäuse beziehungsweise Gehäuseteil 54, welches derart ausgeführt sein kann, dass es auch eine Anfahreinheit mit aufnehmen kann. Die Anfahreinheit kann dabei beliebig austauschbar sein. Entscheidend ist lediglich, dass die Voraussetzungen von seiten des Gehäuses 54 gegeben sind, auch den Zusatzbaustein 55 in Form der Anfahreinheit 53 mit aufzunehmen.

Im in der Figur 3a dargestellten Ausführungsbeispiel umfaßt die Gesamtgetriebebaueinheit 1.3a neben dem Plattformgetriebe 50 aus einem Grundgetriebebaustein 5.2 und integriertem Steuer- und Versorgungsmodul 45 einen hydrodynamischen Drehzahl- und Drehmomentenwandler 29 als Anfahreinheit 52 und einen Zusatzbaustein 56 Nachschaltstufe 30.3a in Form eines Gruppenschaltsatzes, umfassend einen Planetenradsatz 32, dessen Eingang 33 mit dem Ausgang 6 des Grundgetriebebausteines 5 verbunden ist. Der Eingang wird dabei beispielsweise vom Steg 32.4 des Planetenradsatzes 32 gebildet. Der Ausgang 34 der Getriebebaueinheit 1.3a wird beispielsweise von einem konzentrisch zur Getriebesymmetrieachse S_{R} bzw. zur Mittenachse des Planetenradsatzes 32 angeordneten Stirnrad 35 und einer mit diesen gekoppelten Welle gebildet, wobei das Stirnrad 35 mit dem Abtrieb 34 des Planetenradsatzes 32 kämmt. In diesem Fall fungiert der Planetenradsatz 32 als Nachschaltsatz 30.3a, der mittels dem Hohlrad 32.3 und dem konzentrisch zu diesem angeordneten Stirnrad 35 gebildete Stirnradzug bzw. die mit diesem gekoppelte Welle als Abtrieb 37.3a der Getriebebaueinheit 1.3. Die Integration des Nachschaltsatzes 30.3a und des Abtriebes 37.3a erfolgt dabei in einem eigenständigen Gehäuseteil 38, welcher mit dem Gehäuse 23 des Grundgetriebebausteins 5.3 zum Gesamtgetriebegehäuse 22 zusammengefasst ist. Der Gehäuseteil 38 ist dabei frei von Logikeinheiten 8, Versorgungseinheiten 9 und Funktionseinheiten 10, welche im Steuer- und Versorgungsmodul 45 zusammengefasst und im Grundgetriebebaustein 5.2 bzw. dessen Gehäuse 23 integriert sind.

Die Figur 3b verdeutlicht eine weitere mögliche Ausführung einer Gesamtgetriebebaueinheit 1.3b aus einem Plattformgetriebe 50 aus Grundgetriebebaustein 5.2 und einem Zusatzbaustein 55 in Form eines hydrodynamischen Getriebeteiles 4.3b, bei welchem der Getriebeausgang 39 von einem Winkelabtrieb 40 gebildet wird. Der Grundaufbau von hydrodynamischen Getriebeteil 4.3b und Grundgetriebebaustein 5.2 entspricht dabei dem bereits in den Figuren 3a bzw. 2 beschriebenen. Bei diesem Getriebe handelt es sich, je nach Ansteuerung der einzelnen Schaltelemente um eine Ausführung, mittels welcher wenigstens sechs Gänge realisiert werden können. Dazu ist auch hier eine Nachschaltstufe 30.3b vorgesehen, welche hinsichtlich ihres Aufbaus identisch zu der in der Figur 3a beschriebenen ist. Für gleiche Elemente werden dabei auch die gleichen Bezugszeichen verwendet. Diese ist als Planetenradsatz 32 ausgeführt, deren Eingang 33 vom Steg 32.4 des Plänetenradsatz gebildet wird und deren Abtrieb bzw. Ausgang 36 vom Hohlrad 32.3 gebildet wird. Der Ausgang 36 ist dabei mit dem Winkeltrieb 40 gekoppelt. Der Winkeltrieb 40 ist als Kegelradstufe ausgeführt, umfassend ein erstes Kegelrad 41, welches mit dem Ausgang 36 der Nachschaltstufe 30.3b bzw. 34 des Planetenradsatzes 32, insbesondere dem Hohlrad 32.3 drehfest verbunden ist und vorzugsweise eine bauliche Einheit bildet, und ein zweites Kegelrad 42, welches drehfest mit der Abtriebswelle 37.3b, welche gleichzeitig den Ausgang der Getriebebaueinheit 1.3a bildet, verbunden ist. Auch hier sind die Nachschaltstufe 30.3b und der Winkelabtrieb 40 in einem Gehäuseteil, hier dem Gehäuseteil 43 integriert. Der Gehäuseteil 43 bildet dabei mit dem Gehäuse 23 des Grundgetriebebausteines 5.2 das Gesamtgetriebegehäuse 22.

Figur 3c verdeutlicht eine Ausführung einer Gesamtgetriebebaueinheit 1.3c mit einem Grundgetriebebaustein 5.2, einem Zusatzgetriebebaustein 55 in Form eines hydrodynamischen Getriebeteiles 4.3c und einem Zusatzgetriebebaustein 56 in Form eines Nachschaltsatz 30.3c, umfassend einen Planetenradsatz 32 analog zu den in den Figuren 3a und 3b dargestellten Ausführungen, wobei jedoch der Abtrieb 37.3c der Getriebebaueinheit 1.3c koaxial zum Getriebeeingang der Getriebebaueinheit 1.3c angeordnet ist. In diesem Fall erfolgt der Abtrieb ohne zusätzliche Mittel direkt vom Hohlrad 32.3 des Planetenradsatzes 32, wobei das Hohlrad 32.3 zu diesem Zweck mit einer Welle, der Getriebeausgangswelle 44, gekoppelt ist. Die in der Figur 3c dargestellte Getriebekonfiguration kann entsprechend der Ansteuerung der einzelnen Getriebeelemente in Abhängigkeit des Steuerprogrammes als 4-, 5- oder 6-Gang-Version mit koaxialem Abtrieb 37.3c zur Getriebeeingangswelle 46 ausgeführt werden.

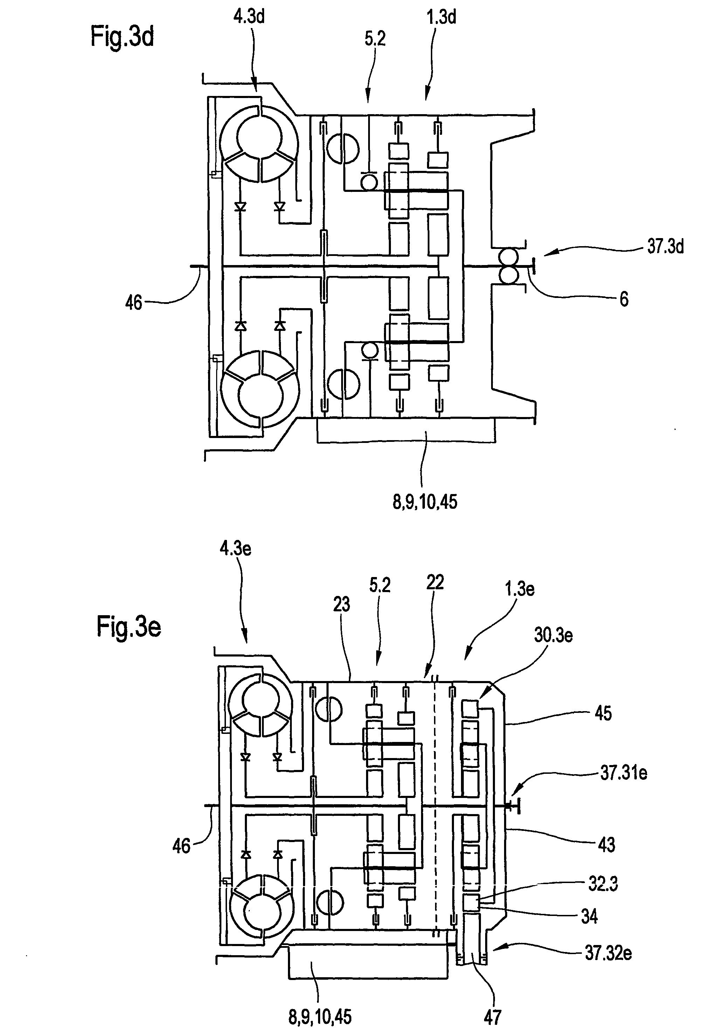

Die Figur 3d verdeutlicht demgegenüber eine Gesamtgetriebebaueinheit 1.3d, welche als 3-Gang-Version konzipiert ist und lediglich aus mechanischen Getriebeteilen des Grundgetriebebausteines 5.2 und dem Zusatzbaustein 55 in Form der Anfahreinheit 51, umfassend einen hydrodynamischen Getriebeteil 4.3d, besteht. Der Ausgang 6 des Grundgetriebebausteines 5 bildet dabei gleichzeitig den Abtrieb 37.3d bzw. Ausgang der Gesamtgetriebebaueinheit 1.3d und ist koaxial zur Getriebeeingangswelle 46 angeordnet.

Figur 3e verdeutlicht eine Ausführung einer Gesamtgetriebebaueinheit 1.3e, umfassend einen Grundgetriebebaustein 5.2, einen hydrodynamischen Getriebeteil 4.3e und ein weiterer zweiter Zusatzbaustein 56, umfassend eine Nachschaltstufe 30.3e, welche vorzugsweise analog zu den in den Figuren 3a bis 3c ausgeführt ist. Dabei fungiert der Ausgang 34 des Planetenradsatzes 32, welcher von der Hohlwelle 32.3 gebildet wird, gleichzeitig als ein erster Abtrieb 37.31 e, wobei der Abtrieb 37.31 e koaxial zur Getriebeeingangswelle 46 angeordnet ist, während über einen mit dem Hohlrad 32.3 gekoppelten Stimradzug, im einfachsten Fall ein zusätzliches Stirnrad 47, ein weiterer zweiter Abtrieb 37.32e realisiert werden kann. Auch hier sind Nachschaltstufe 30.3e und die entsprechenden Abtriebe 37.31e, 37.32e in einem separaten Gehäuseteil in Form eines Abschlussteiles 43 angeordnet, welches mit dem Gehäuse 23 des Grundgetriebebausteines 5.2 zu einer baulichen Einheit, dem Gesamtgetriebegehäuse 22 zusammenfassbar ist.

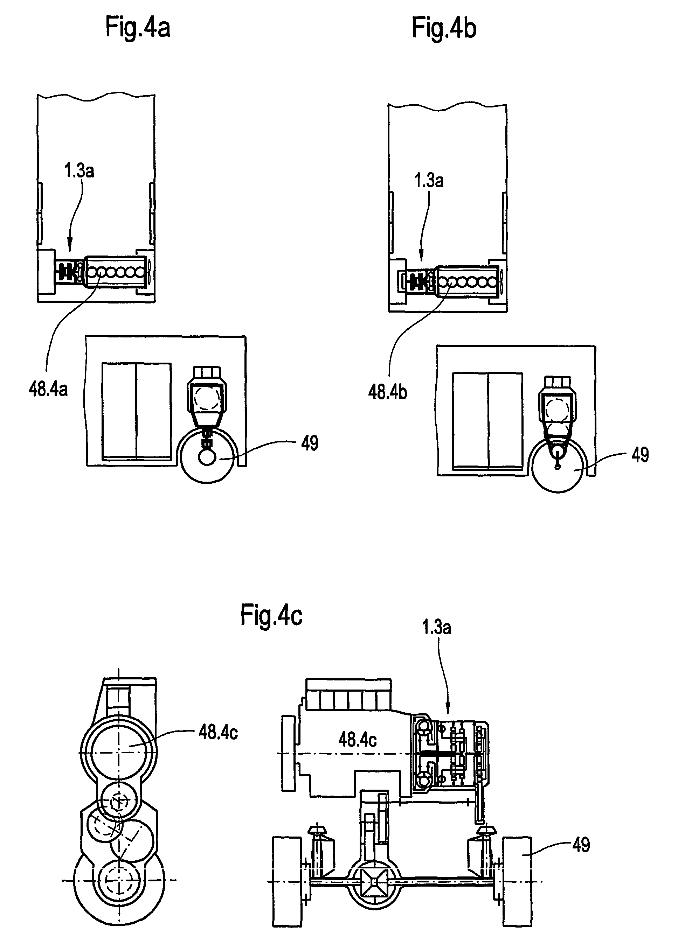

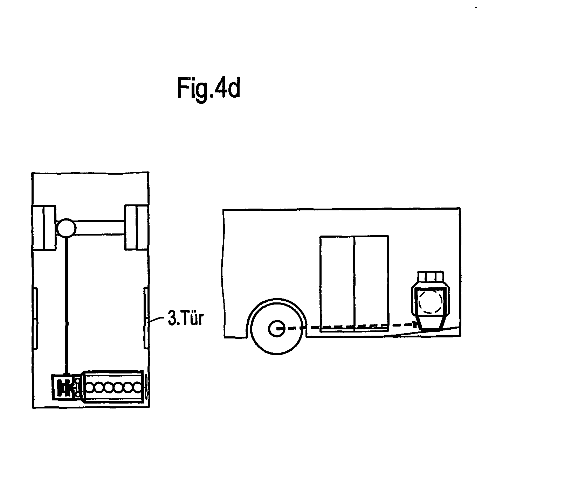

Die Figuren 3a bis 3e verdeutlichen mögliche Ausführungen von einzelnen Gesamtgetriebebaueinheiten eines Getriebebaukastens mit einem hohen Grad an Standardisierung auf der Basis des Getriebebaukastensystems. Weitere Ausführungsmöglichkeiten sind ebenfalls denkbar, und liegen jeweils im Ermessen des zuständigen Fachmannes. Die in den Figuren 3a bis 3e dargestellten Ausführungen stellen dabei bevorzugte Ausführungen dar, welche sich hinsichtlich der zu realisierenden Funktion durch einen hohen Grad an Standardisierung, einen geringen Bauteilbedarf sowie Bauraumbedarf auszeichnen. Aus diesen Getriebebaueinheiten ergeben sich unterschiedliche Anwendungsmöglichkeiten, welche in den Figuren 4 bis 7 wiedergegeben sind.

Die Getriebekonfiguration gemäß der Figur 3a findet dabei für die nachfolgend in den Figuren 4a bis 4d dargestellten Ausführungen am Fahrzeug Verwendung. Die Ausführung einer Gesamtgetriebebaueinheit 1.3a gemäß Figur 3a mit Mittenabtrieb, d. h. Anordnung des Abtriebes konzentrisch zur Mittenachse des Planetenradsatzes 32 der Nachschaltstufe, findet dabei vorzugsweise für Queranordnungen der Antriebsmaschine 48.4a, 48.4b, 48.4c im Fahrzeug Verwendung. Die Gesamtgetriebebaueinheit 1.3a ist dabei jeweils koaxial zur Antriebsmaschine 48.4a angeordnet. Der Abtrieb erfolgt dabei gemäß den Ausführungen in den Figuren 4a bis 4d jeweils in vertikaler Richtung beispielsweise auf eine Achse oder zu einem Rad 49. Der Achsantrieb kann dabei entweder mittig zum Mittenabtrieb oder versetzt erfolgen. Die Kopplung zwischen Mittenantrieb und der Achse erfolgt dabei entweder über einen Kegelradsatz, eine Tripode-Gelenkwelle und eine Standardachse mit vertikalem Eintrieb oder über einen Stirnradsatz, ein Stirnraddifferential mit homogenetischen Gelenkwellen oder Tripode-Gelenkwellen.

Figur 4c verdeutlicht eine Ausführung eines Antriebssystems für einen Busantrieb mit ebenfalls quer eingebauter Antriebsmaschine 48.4c, eine Gesamtgetriebebaueinheit 1.3a, wobei der Mittenabtrieb vertikal erfolgt, die Achse jedoch mittig über einen seitlichen Abtrieb, beispielsweise einem Stirnradgetriebe angetrieben wird.

Figur 4d verdeutlicht eine Ausführung analog Figur 4c, wobei jedoch als Achse eine Portalachse zum Einsatz gelangt.

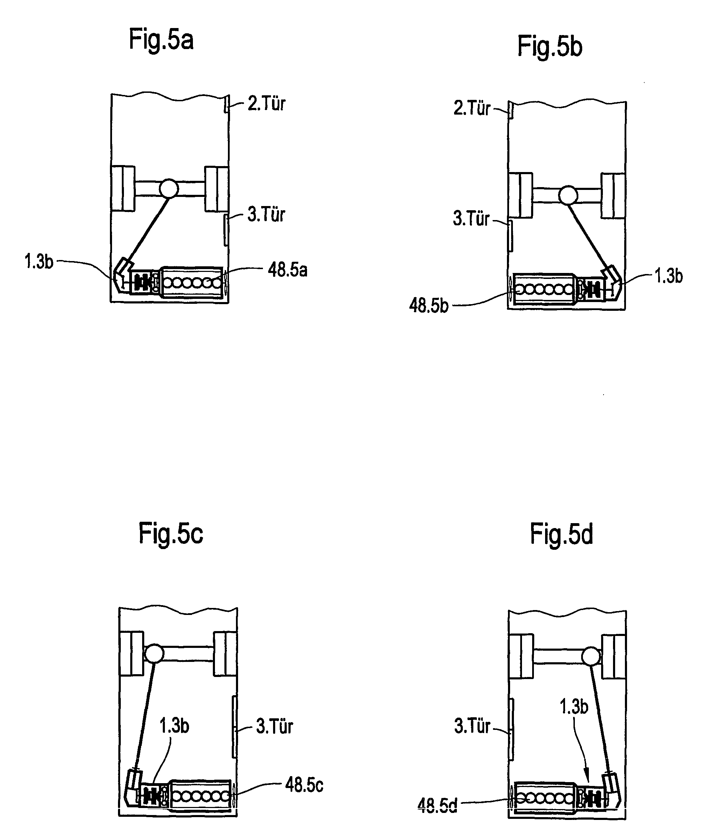

Die Figuren 5a bis 5d verdeutlichen Ausführungen von Antriebssystemen für Busantriebe, bei denen die Antriebsmaschine 48.5a bis 48.5d ebenfalls quer angeordnet ist. Die Getriebebaueinheit 1.3b ist koaxial zur Antriebsmaschine 48.5a bis 48.5d angeordnet. Der Antrieb auf die Achse erfolgt durch Kopplung des Abtriebes der Gesamtgetriebebaueinheit 1.3b mittig. Dazu werden Winkeltriebe von 60 und 65° verwendet. Die Figur 5a verdeutlicht dabei eine Ausführung für Rechtsverkehr, während die Figur 5b eine Ausführung den Einsatz in Ländern mit Linksbetrieb ermöglicht. Die Figuren 5c und 5d verdeutlichen analoge Ausführungen jeweils für Rechts- und Linksverkehr, wobei jedoch die Achse als Portalachse ausgeführt ist und der Niederflurantrieb quer erfolgt und nicht mittig, sondern versetzt auf die Achse.

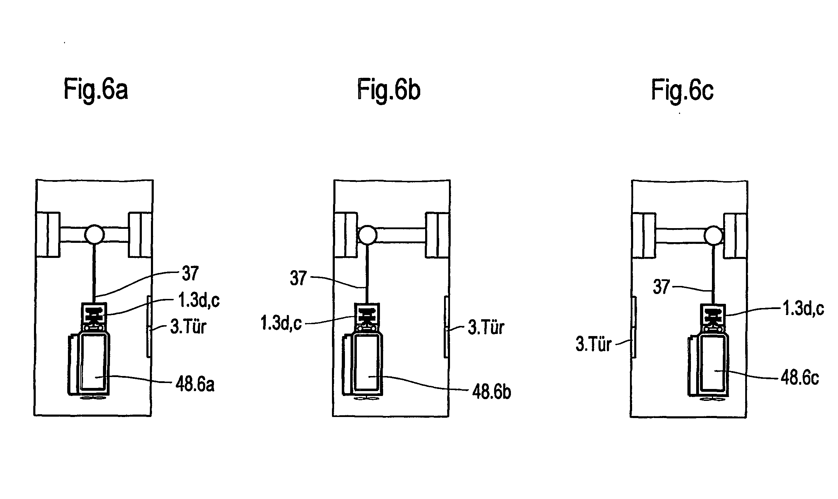

Die Figuren 6a bis 6c verdeutlichen Anwendungen für Gesamtgetriebeausführungen gemäß der Figuren 3c und 3d. Figur 6a zeigt in schematisch vereinfachter Darstellung einen Standard-Busantrieb, bei welchem die Anordnung von Antriebsmaschine 48.6a sowie der Gesamtgetriebebaueinheit 1.3c bzw. 1.3d längs zur Fahrtrichtung erfolgt. Der Achsantrieb erfolgt im wesentlichen im Bereich der Mitte der Achse, wobei der Abtrieb 37 ebenfalls in Längsrichtung der Achse gekoppelt ist. Die Figur 6b verdeutlicht eine Ausführung gemäß Figur 6a, wobei jedoch der Achsantrieb nicht mittig, sondern für eine Portalachse versetzt erfolgt. Beide Ausführungen eignen sich für Rechtsverkehr, wobei die Ausführung gemäß Figur 6a auch für Linksverkehr geeignet ist. Um bei Ausführungen mit Portalachse eine Eignung für Linksverkehr zu erzielen, ist eine Anwendung gemäß Figur 6c an die Portalachse erforderlich. Daraus wird ersichtlich, dass die Anbindung an die Portalachse immer auf der Seite der Achse erfolgt, welche von den Türen des Fahrzeuges am weitesten entfernt ist.

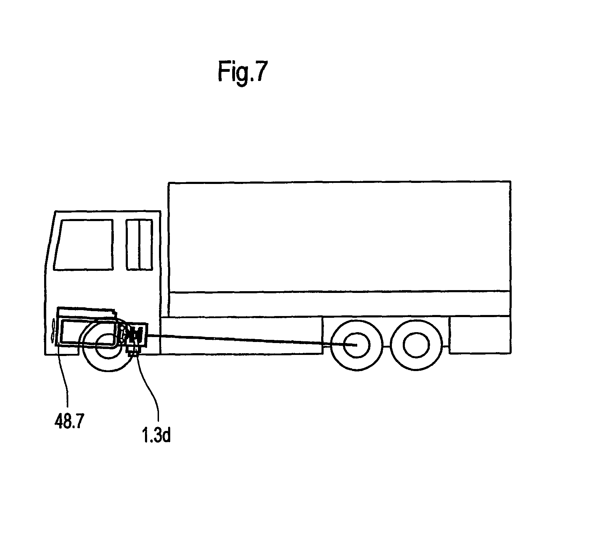

Figur 7 verdeutlicht anhand einer Seitenansicht auf ein Fahrzeug eine mögliche Anwendung einer Gesamtgetriebeausführung gemäß Figur 3d. Diese ist besonders für Allradantrieb geeignet, wobei die Anordnung der Verbrennungskraftmaschine 48.7 und die Getriebebaueinheit in Längsrichtung des Fahrzeuges erfolgt und der Antrieb auf die Achsen mittig realisiert wird.

### Bezugszeichenliste

- 1, 1.2, 1.3a, 1.3b, 1.3c, 1.3d: Gesamtgetriebebaueinheit
- 2: Verbundgetriene
- 3, 3.2, 3.3a, 3.3b, 3.3c, 3.3d: mechanischer Getriebeteil
- 4, 4.2, 4.3a, 4.3b, 4.3c, 4.3d: hydrodynamischer Getriebeteil
- 5, 5.2: Grundgetnebebaustein
- 6,6.2: Ausgang
- 7, 7.2: Getriebeausgang
- 8, 8.2: Logikeinheit
- 9, 9.2: Steuer- und Versorgungseinheit
- 10, 10.2: Funktionseinheit
- 11: Außenumfang der leistungsübertragenden Elemente
- 12: Steuervorrichtung
- 13: Steuereinrichtung
- 14: hydraulische Steuervorrichtung
- 15: elektronische Steuervorrichtung
- 16: elektronische Steuereinrichtung
- 17: Trägerplatte
- 18: Steuereinrichtungsgehäuse
- 19: Pumpeinrichtung
- 20: Filtereinrichtung
- 21: Wärmetauscher
- 22: Getriebegehäuse
- 23: Gehäuse des Rumpfgetriebes
- 24: Planetenradsatz
- 24.1: Sonnenrad
- 24.2: Planetenräder
- 24.3: Hohlrad
- 25: Planetenradsatz
- 25.1: Sonnenrad
- 25.2: Planetenräder
- 25.3: Hohlrad
- 26: Steg
- 27: Welle
- 28: Welle
- 29: hydrodynamischer Drehzahl-/Drehmomentenwandler
- 30.3a, 30.3b 30.3c, 30.3d: Nachschaltstufe
- 31: Abtriebseinheit
- 32: Planetenradsatz
- 32.1: Sonnenrad
- 32.2: Planetenräder
- 32.3: Hohlrad
- 32.4: Steg
- 33: Eingang des Planetenradsatzes 32
- 34: Ausgang des Planetenradsatzes 32
- 35: Stirnrad
- 36: Abtrieb
- 37: Abtrieb
- 38: Gehäuseteil
- 39: Getriebeausgang
- 40: Winkelabtrieb
- 41: erstes Kegelrad
- 42: zweites Kegelrad
- 43: Abschlussteil, Gehäuseteil
- 44: Getriebeausgangswelle
- 45: Steuer- und Versorgungsmodul
- 46: Getriebeeingang
- 47: Stirnrad
- 48.4a, 48.4b, 48.4c, 48.4d, 48.5a, 48.5b, 48.5c, 48.5d, 48.6a, 48.6b, 48.6c, 48.7: Antriebsmaschine
- 50: Plattformgetriebe
- 51: Anfahreinheit
- 52: Grundgetriebe
- 53: Logik- und Steuerungs- bzw. Versorgungsmodul
- 54: Gehäuseteil
- 55,56: Zusatzbaustein
- S_{G}: Getriebesymmetrieachse

## Patentansprüche

1. Getriebebaukastensystem zur Erstellung-einer Mehrzahl für unterschiedliche Einsatzzwecke modifizierter Getriebebaueinheiten mit einem Getriebeeingang und einem Getriebeausgang;
**gekennzeichnet durch** die folgenden Merkmale:
1.1 mit einem leistungsübertragende Elemente umfassenden mechanischen Getriebeteil (3; 3.2; 3.3a; 3.3b; 3.3c; 3.3d), welcher in einem Gehäuseteil (54) angeordnet ist und mit diesem einen Grundgetriebebaustein (5; 5.2) bildet, der mindestens einen Eingang und einen Ausgang umfasst;
1.2 mit einer Logikeinheit (8; 8.2), die im Grundgetriebebaustein (5; 5.2) unterhalb der theoretischen Verbindungslinie zwischen Eingang und Ausgang integriert oder aber am Gehäuseteil (54) angeflanscht ist;
**gekennzeichnet durch** die folgenden Merkmale:
1.3 mit einer Steuer- und Versorgungseinheit (9; 9.2), die im Grundgetriebebaustein (5; 5.2) integriert ist; und die Versorgungseinheit (9; 9.2) Bestandteile eines Betriebsmittel- und/oder Steuer- und/oder Schmiermittelsystems, Fördereinrichtungen (19), Einrichtungen zur Speicherung und Funktionseinheiten (20, 21) zur Beeinflussung der Betriebsmittel-, Steuer- und/oder Schmiermittelversorgung und Zusatzelemente, umfassend Wärmetauscher, Filter, Pumpen, Ventile, umfasst
1.4 die Logikeinheit (8; 8.2) umfasst Sensoren, elektronische Steuergeräte (15, 16) und Aktoren.
1.5 die Anordnung von Logik- und Steuer- und Versorgungseinheit erfolgt unterhalb der leistungsübertragenden Elemente des Grundgetriebebausteins (5; 5.2);
1.6 die Logik- und Steuer- und Versorgungseinheit (8; 8.2; 9; 9.2) sind zu einem kombiniertem Logik-Steuerungs- und Versorgungsmodul (53) zusammengefasst;
1.7 der Grundgetriebebaustein (5; 5.2) wird mit dem Zusatzbaustein, welcher eine Anfahreinheit (51) umfasst, kombiniert, wobei die Anfahreinheit (51) dem mechanischen Getriebeteil (3; 3.2; 3.3a; 3.3b; 3.3c; 3.3d) vorgeschaltet ist und im Gehäuse des Grundgetriebebausteines (5; 5.2) angeordnet ist.

2. Getriebebaukastensystem nach Anspruch 1, **dadurch gekennzeichnet, dass** die Anordnung von Logik- und Steuer-und Versorgungseinheit (8; 8.2; 9; 9.2) im Grundgetriebebaustein (5; 5.2) in einem bestimmten Mindestabstand zum Außenumfang (11) der leistungsübertragenden Getriebeelemente unterhalb einer theoretischen Verbindungsachse zwischen dem Eingang und dem Ausgang des Grundgetriebebausteines (5; 5.2) und unterhalb der leistungsübertragenden Getriebeelemente erfolgt.

3. Getriebebaukastensystem nach einem der Ansprüche 1 oder 2, **dadurch gekennzeichnet, dass** die Anordnung von Logik- und Steuer-und Versorgungseinheit (8; 8.2; 9; 9.2) im Bereich der Höhe des Spiegels eines im Gehäuseteil (34) des Grundgetriebebausteines sich einstellbaren Betriebsmittelsumpfes erfolgt.

4. Getriebebaukastensystem nach einem der Ansprüche 1 bis 3, **dadurch gekennzeichnet, dass** Anfahreinheit (52) und Grundgetriebebaustein (5; 5.2) aneinander angeflanscht sind.

5. Getriebebaukastensystem nach einem der Ansprüche 1 bis 4, **dadurch gekennzeichnet, dass** der Grundgetriebebaustein mit einem weiteren zweiten Zusatzbaustein (56) kombinierbar ist, welcher eine Abschlusseinheit (43) umfasst.

6. Getriebebaukastensystem nach Anspruch 5, **dadurch gekennzeichnet, dass** die mit dem Grundgetriebebaustein (5; 5.2) koppelbare Abschlusseinheit (43) ein weiteres Gehäuseteilelement umfasst, welches mit dem Gehäuseteil (54) des Grundgetriebebausteines (5; 5;2) verbindbar ist.

7. Getriebebaukastensystem nach Anspruch 6, **dadurch gekennzeichnet, dass** die Abschlusseinheit (43) als Getriebegehäusedeckel ausgeführt ist.

8. Getriebebaukastensystem nach Anspruch 6 oder 7, **dadurch gekennzeichnet, dass** die Abschlusseinheit (43) eine Nachschaltstufe (30.3.a; 30.3b; 30.3c; 30.3d) oder ein stufenloses Getriebeteil umfasst, welche mit einem Ausgang des Grundgetriebebausteines (5; 5.2) gekoppelt sind und den Getriebeausgang der jeweiligen Getriebebaueinheit bilden und vom Gehäuseteilelement der Abschlusseinheit umschlossen werden.

9. Getriebebaukastensystem nach Anspruch 8, **dadurch gekennzeichnet, dass** die Nachschaltstufe (30.3.a; 30.3b; 30.3c; 30.3d) von einem Gruppenschaltsatz gebildet wird.

10. Getriebebaukastensystem nach einem der Ansprüche 5 bis 9, **dadurch gekennzeichnet, dass** die Abschlusseinheit (43) einen Winkeltrieb umfasst.

11. Getriebebaukastensystem nach einem der Ansprüche 1 bis 9, **dadurch gekennzeichnet, dass** die Anfahreinheit (51) ein Anfahrelement umfasst, welches als hydrodynamische Kupplung oder hydrodynamischer Drehzahl-/Drehmomentwandler (29) ausgeführt ist.

12. Getriebebaukastensystem nach einem der Ansprüche 1 bis 9, **dadurch gekennzeichnet, dass** die Anfahreinheit (51) ein Anfahrelement umfasst, welches als mechanische Kupplung ausgeführt ist.

13. Getriebebaukastensystem Anspruch, 1 gemäß bis mit einem, einer Mehrzahl von Gesamtgetriebeeinheiten zugrundeliegenden gemeinsamen Baueinheit in Form eines Plattformgetriebes (50), umfassend einen Grundgetriebebaustein (5; 5.2) und einenin diesem interierten Logik- Steuerungs- und Versorgungsmodul.

14. Getriebebaukastensystem nach einem der Ansprüche 1 bis 13, **gekennzeichnet durch** folgende Merkmale:
14.1 der mechanische Getriebeteil (3, 3.2, 3.3a, 3.3b, 3.3c, 3.3d) umfasst zwei Planetenradsätze (24, 25) mit jeweils einem Sonnenrad (24.1, 25.1), Hohlrad (24.3.25.3), Planetenrädern (24.2, 25.2) und einem Steg (26);
14.2 die Stege beider Planetenradsätze (24, 25) sind miteinander gekoppelt;
14.3 die Sonnenräder (25.1, 24.1) der Planetenradsätze (24, 25) sind mit dem Eingang des Grundgetriebebausteines (5, 5.2) gekoppelt.

## Claims

1. A modular system for transmissions for producing a plurality of transmission modules modified for different purposes, comprising transmission input and a transmission output,
**characterized by** the following features:
1.1 with a mechanical transmission part (3; 3.2; 3.3a; 3.3b; 3.3c; 3.3 d) which comprises power-transferring elements and is arranged in a housing part (54) and forms with the same a basic transmission module (5; 5.2) comprising at least one input and one output;
1.2 with a logic unit (8; 8.2) which is integrated in the basic transmission module (5; 5.2) beneath the theoretical connecting line between input and output or is flange-mounted on the housing part (54);
**characterized by** the following features:
1.3 with a control and supply unit (9; 9.2) which is integrated in the basic transmission module (5; 5.2), and
1.4 the logic unit (8; 8.2) comprises sensors, electronic control devices (15, 16) and actuators;
1.5 the arrangement of logic and control and supply unit occurs beneath the power-transferring elements of the basic transmission module (5; 5.2);
1.6 the logic and control and supply unit (8; 8.2; 9; 9.2) are combined into a combined logic/control and supply module (53);
1.7 the basic transmission module (5; 5.2) is combined with the additional module which comprises a starting unit (51), with the starting unit (51) being provided upstream of the mechanical transmission part (3; 3.2; 3.3a; 3.3b; 3.3c; 3.3 d) and is arranged in the housing of the basic transmission module (5; 5.2).

2. A modular system for a transmission according to claim 1, **characterized in that** the arrangement of logic and control and supply unit (8; 8.2; 9; 9.2) in the basic transmission module (5; 5.2) occurs at a certain minimum distance to the outside circumference (11) of the power-transferring transmission elements beneath a theoretical connecting axis between the input and the output of the basic transmission module (5; 5.2) and beneath the power-transferring transmission elements.

3. A modular system for a transmission according to one of the claims 1 or 2, **characterized in that** the arrangement of logic and control and supply unit (8; 8.2; 9; 9.2) occurs in the region of the height of the level of an operating medium sump settling in the housing part (34) of the basic transmission module.

4. A modular system for a transmission according to one of the claims 1 to 3, **characterized in that** the starting unit (52) and the basic transmission module (5; 5.2) are flange-mounted on each other.

5. A modular system for a transmission according to one of the claims 1 to 4,
**characterized in that** the basic transmission module can be combined with a further second additional module (56) which comprises a closing unit (43).

6. A modular system for a transmission according to claim 5, **characterized in that** the closing unit (43) which can be coupled with the basic transmission module (5; 5.2) comprises a further partial housing element which can be joined with the housing part (54) of the basic transmission module (5; 5.2).

7. A modular system for a transmission according to claim 6, **characterized in that** the closing unit (43) is configured as a transmission housing cover.

8. A modular system for a transmission according to claim 6 or 7, **characterized in that** the closing unit (43) comprises a rear-mounted step (30.3a; 30.3b; 30.3c; 30.3d) or an infinitely variable transmission part which are coupled with an output of the basic transmission module (5; 5.2) and form the transmission output of the respective transmission module and are enclosed by the partial housing element of the closing unit.

9. A modular system for a transmission according to claim 8, **characterized in that** the rear-mounted step (30.3a; 30.3b; 30.3c; 30.3d) is formed by a range change unit.

10. A modular system for a transmission according to one of the claims 5 to 9, **characterized in that** the closing unit (43) comprises a right-angle gear drive.

11. A modular system for a transmission according to one of the claims 1 to 9, **characterized in that** the starting unit (51) comprises a starting element which is configured as a hydrodynamic coupling or a hydrodynamic speed/torque converter (29).

12. A modular system for a transmission according to one of the claims 1 to 9, **characterized in that** the starting unit (51) comprises a starting element which is configured as a mechanical coupling.

13. A modular system for a transmission according to claim 1, comprising a common module, which is based on a plurality of overall transmission units, in the form of a platform transmission (50), comprising a basic transmission module (5; 5.2) and a logic, control and supply module integrated in the same.

14. A modular system for a transmission according to one of the claims 1 to 13, **characterized by** the following features:
14.1 the mechanical transmission part (3; 3.2; 3.3a; 3.3b; 3.3c; 3.3 d) comprises two planet wheel sets (24, 25), each comprising a sun wheel (24.1, 25.1), a ring gear (24.3, 25.3), planet wheels (24.2, 25.2) and a frame (26);
14.2 the frames of the two planet wheel sets (24, 25) are coupled with each other;
14.3 the sun wheels (25.1, 24.1) of the planet wheel sets (24, 25) are coupled with the input of the basic transmission module (5, 5.2).

## Revendications

1. Système modulaire d'engrenage pour construire une pluralité de modules d'engrenage modifiés en vue d'utilisations diverses avec une entrée d'engrenage et une sortie d'engrenage ;
1.1 avec une partie engrenage mécanique (3 ; 3.2 ; 3.3a ; 3.3b ; 3.3c ; 3.3d) comprenant des éléments transmetteurs de puissance qui est disposée dans une partie carter (54) avec laquelle elle forme un module d'engrenage de base (5 ; 5.2) comprenant au moins une entrée et une sortie ;
1.2 avec une unité logique (8 ; 8.2) qui est soit intégrée dans le module d'engrenage de base (5 ; 5.2) en dessous de la ligne de jonction théorique entre l'entrée et la sortie, soit bridée sur la partie carter (54) ;
**caractérisé par** les particularités suivantes :
1.3 avec une unité de commande et d'alimentation (9 ; 9.2) qui est intégrée dans le module d'engrenage de base (5 ; 5.2) et l'unité d'alimentation (9 ; 9.2) comprenant des parties constitutives d'un système de fluide de travail et/ou de commande et/ou de lubrifiant, des organes transporteurs (19), des organes destinés au stockage et des unités fonctionnelles (20, 21) destinées à influer sur l'alimentation en fluide de travail, en commande et/ou en lubrifiant et des éléments supplémentaires comprenant des échangeurs de chaleur, des filtres, des pompes, des valves,
1.4 l'unité logique (8 ; 8.2) comprend des capteurs, des appareils de commande électronique (15, 16) et des acteurs,
1.5 l'unité logique et l'unité de commande et d'alimentation sont disposées en dessous des éléments transmetteurs de puissance du module d'engrenage de base (5 ; 5.2),
1.6 l'unité logique et l'unité de commande et d'alimentation (8 ; 8.2 ; 9 ; 9.2) sont regroupées dans un module combiné logique, commande et alimentation (53),
1.7 le module d'engrenage de base (5 ; 5.2) est combiné avec le module supplémentaire qui comprend une unité de démarrage (51), l'unité de démarrage (51) étant montée en amont de la partie engrenage mécanique (3 ; 3.2 ; 3.3a ; 3.3b ; 3.3c ; 3.3d) et disposée dans le carter du module d'engrenage de base (5 ; 5.2).

2. Système modulaire d'engrenage selon la revendication 1, **caractérisé en ce que** les unités logique et de commande et d'alimentation (8 ; 8.2 ; 9 ; 9.2) sont agencées dans le module d'engrenage de base (5 ; 5.2) à une certaine distance minimale du périmètre extérieur (11) de l'élément d'engrenage transmetteur de puissance en dessous d'un axe de liaison théorique entre l'entrée et la sortie du module d'engrenage de base (5 ; 5.2) et en dessous des éléments d'engrenage transmetteurs de puissance.

3. Système modulaire d'engrenage selon l'une quelconque des revendications 1 ou 2, **caractérisé en ce que** les unités logique et de commande et d'alimentation (8 ; 8.2 ; 9 ; 9.2) sont agencées à la hauteur du niveau d'un puisard de fluide de travail susceptible de se rassembler dans la partie carter (34) du module d'engrenage de base.

4. Système modulaire d'engrenage selon l'une quelconque des revendications 1 à 3, **caractérisé en ce que** l'unité de démarrage (52) et le module d'engrenage de base (5 ; 5.2) sont bridés l'un à l'autre.

5. Système modulaire d'engrenage selon l'une quelconque des revendications 1 à 4, **caractérisé en ce que** le module d'engrenage de base est apte à être combiné avec un deuxième module supplémentaire (56) qui comprend une unité terminale (43).

6. Système modulaire d'engrenage selon la revendication 5, **caractérisé en ce que** l'unité terminale (43), qui est couplable au module d'engrenage de base (5 ; 5.2), comprend un autre élément de partie carter qui est apte à être relié à la partie carter (54) du module d'engrenage de base (5 ; 5.2).

7. Système modulaire d'engrenage selon la revendication 6, **caractérisé en ce que** l'unité terminale (43) est réalisée sous forme de couvercle de carter d'engrenage.

8. Système modulaire d'engrenage selon la revendication 6 ou 7, **caractérisé en ce que** l'unité terminale (43) comprend un étage de changement de vitesse consécutif (30.3a ; 30.3b ; 30.3c ; 30.3d) ou une partie engrenage à changement de vitesse continu qui est couplée à une sortie du module d'engrenage de base (5 ; 5.2) et forme la sortie d'engrenage du module d'engrenage respectif et est enserrée par l'élément de la partie carter de l'unité terminale.

9. Système modulaire d'engrenage selon la revendication 8, **caractérisé en ce que** l'étage de changement de vitesse consécutif (30.3a ; 30.3b ; 30.3c ; 30.3d) est formé par un train de jeux de changement de vitesse.

10. Système modulaire d'engrenages selon l'une quelconque des revendications 5 à 9, **caractérisé en ce que** l'unité terminale (43) comprend un renvoi d'angle.

11. Système modulaire d'engrenages selon l'une quelconque des revendications 1 à 9, **caractérisé en ce que** l'unité de démarrage (51) comprend un élément de démarrage qui est réalisé sous forme de coupleur hydrodynamique ou de convertisseur de couple hydrodynamique (29).

12. Système modulaire d'engrenages selon l'une quelconque des revendications 1 à 9, **caractérisé en ce que** l'unité de démarrage (51) comprend un élément de démarrage qui est réalisé sous forme de coupleur mécanique.

13. Système modulaire d'engrenages selon la revendication 1 avec un module commun à une pluralité d'unités d'un train d'engrenages dans son ensemble réalisé sous forme de train d'engrenages à plate-forme (50), du type comprenant un module d'engrenage de base (5 ; 5.2) et un module logique, de commande et d'alimentation intégré dans celui-ci.

14. Système modulaire d'engrenages selon l'une quelconque des revendications 1 à 13, **caractérisé par** les particularités suivantes :
14.1 la partie engrenage mécanique (3 ; 3.2 ; 3.3a ; 3.3b ; 3.3c ; 3.3d) comprend deux trains planétaires (24, 25) ayant chacun une roue solaire (24.1, 25.1), une couronne à denture intérieure (24.3, 25.3), des satellites (24.2, 25.2) et un porte-satellites (26) ;
14.2 les porte-satellites des deux trains planétaires (24, 25) sont couplés ensemble ;
14.3 les roues solaires (25.1, 24.1) des trains planétaires (24, 25) sont couplées à l'entrée du module d'engrenage de base (5 ; 5.2).
